# EUROPEAN PATENT APPLICATION

(11) **EP 4 783 550 A1**
(43) Date of publication of application: **29.07.2026**
(21) Application number: 24886386.2
(22) Date of filing: 04.11.2024
(51) Int. Cl.: H04L 65/80, H04W 8/24, H04L 67/131, H04L 65/1069, H04L 9/40, H04L 65/65

(54) **METHOD AND APPARATUS FOR SERVICING TRAFFIC IN CONSIDERATION OF CHARACTERISTICS OF MEDIA IN WIRELESS COMMUNICATION SYSTEM**

(30) Priority: 02.11.2023 KR 20230149982
(71) Applicant: Samsung Electronics Co., Ltd., Suwon-si, Gyeonggi-do 16677 (KR)
(72) Inventor: BAEK, Youngkyo, Suwon-si, Gyeonggi-do 16677 (KR)
(74) Representative: Gulde & Partner
(86) International application number: PCT/KR2024/017113
(87) International publication number: WO 2025/095716

(57) **Abstract**

The disclosure relates to a 5G or 6G communication system for supporting a higher data transmission rate. A method performed by a session management function (SMF) entity in a wireless communication system may comprise the steps of: receiving an uplink (UL) protocol description from a policy control function (PCF) entity, wherein the UL protocol description is transmitted from an application function (AF) entity to the PCF entity; and transmitting the UL protocol description for UL protocol data unit (PDU) set handling of terminal.

## Description

### [Technical Field]

The present disclosure relates to a communication method and apparatus for supporting quality of service (QoS) in consideration of application-level traffic characteristics in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, the need for a method for servicing traffic by reflecting characteristics of media has emerged in order to perform ultra-high-speed, low-latency communication such as XR services in a wireless communication system.

### [Disclosure]

### [Technical Problem]

The present disclosure is directed to providing a method for providing a service by reflecting application-level characteristics in order to well satisfy user's perceived performance in a case of ultra-high-speed, low-latency communication such as XR services in a wireless communication system.

### [Technical Solution]

According to an embodiment of the present disclosure, a method performed by a session management function (SMF) entity in a wireless communication system includes: receiving an uplink (UL) protocol description from a policy control function (PCF) entity, - the UL protocol description being transmitted from an application function (AF) entity to the PCF entity; and transmitting the UL protocol description for UL protocol data unit (PDU) set handling of a terminal.

Meanwhile, according to another embodiment of the present disclosure, a method performed by a terminal in a wireless communication system includes: transmitting a PDU session establishment request message; receiving a PDU session establishment accept message including an uplink (UL) protocol description from a session management function (SMF) entity in response to the PDU session establishment request message; and triggering UL protocol data unit (PDU) set handling based on the UL protocol description.

Meanwhile, according to still another embodiment of the present disclosure, a session management function (SMF) entity in a wireless communication system includes: a transceiver; and a controller configured to control reception of an uplink (UL) protocol description from a policy control function (PCF) entity through the transceiver, - the UL protocol description being transmitted from an application function (AF) entity to the PCF entity, and transmission of the UL protocol description for UL protocol data unit (PDU) set handling of a terminal.

Meanwhile, according to still yet another embodiment of the present disclosure, a terminal in a wireless communication system includes: a transceiver; and a controller configured to control transmission of a PDU session establishment request message via the transceiver, reception of a PDU session establishment accept message including an uplink (UL) protocol description from a session management function (SMF) entity in response to the PDU session establishment request message, and triggering of UL protocol data unit (PDU) set handling based on the UL protocol description.

### [Advantageous Effect]

According to an embodiment of the present disclosure, it is possible to efficiently provide a service by reflecting application-level characteristics in order to well satisfy user's perceived performance in the case of ultra-high-speed, low-latency communication such as XR services in a wireless communication system.

### [Description of Drawings]

FIG. 1 is a diagram illustrating an example of an application data transmission path in a wireless communication system according to an embodiment of the present disclosure.
FIG. 2 is a sequence diagram illustrating a method for triggering a UE to provide PDU set QoS for uplink (UL) data traffic in a wireless communication system according to an embodiment of the present disclosure.
FIG. 3 is a sequence diagram illustrating a method for triggering a UE to provide PDU set QoS for uplink data traffic in a wireless communication system according to an embodiment of the present disclosure.
FIG. 4 is a sequence diagram illustrating a method for triggering a UE to provide PDU set QoS for uplink data traffic in a wireless communication system according to an embodiment of the present disclosure.
FIG. 5 is a sequence diagram illustrating a method for triggering a UE to provide PDU set QoS for uplink data traffic in a wireless communication system according to an embodiment of the present disclosure.
FIG. 6 is a sequence diagram illustrating a method for triggering a UE to provide PDU set QoS for uplink data traffic in a wireless communication system according to an embodiment of the present disclosure.
FIG. 7 is a block diagram illustrating a structure of a terminal according to an embodiment of the present disclosure.
FIG. 8 is a block diagram illustrating a structure of a network function (NF) entity according to an embodiment of the present disclosure.

### [Mode for Disclosure]

Hereinafter, an operation principle of the present disclosure will be described in detail with reference to the accompanying drawings. In the following description, when it is determined that the detailed description of the known arts or configurations related to the present disclosure may unnecessarily obscure the gist of the present disclosure, the detailed description thereof will be omitted. Further, the following terms are terms defined in consideration of the functions in the present disclosure and may vary depending on the intention, practice, etc., of users and operators. Therefore, the definitions thereof should be construed based on the contents throughout the specification.

For the same reason, some components in the accompanying drawings are omitted or schematically illustrated. In addition, the size of each component does not entirely reflect the actual size. The same reference numerals are assigned to the same or corresponding components in each drawing.

Various advantages and features of the present disclosure and methods accomplishing the same will become apparent from the following detailed description of embodiments with reference to the accompanying drawings. However, the present disclosure is not limited to embodiments to be described below, but may be implemented in various different forms, these embodiments will be provided only in order to make the present disclosure complete and allow those skilled in the art to completely recognize the scope of the present disclosure, and the present disclosure will be defined by the scope of the claims. Throughout the specification, like reference numerals denote like components.

In this case, it will be appreciated that each block of a processing flowchart and combinations of the flowcharts may be executed by computer program instructions. Since these computer program instructions may be mounted in a processor of a general-purpose computer, a special-purpose computer, or other programmable data processing apparatuses, these computer program instructions executed through the processor of the computer or other programmable data processing apparatuses create means performing functions described in a block(s) of the flowchart. Since these computer program instructions may also be stored in a computer-usable or computer-readable memory that may direct a computer or other programmable data processing apparatus to implement functions in a specific scheme, the instructions stored in the computer-usable or computer-readable memory can produce an article of manufacture including instruction means that perform the functions described in the flowchart block(s). Since the computer program instructions may also be mounted on the computer or other programmable data processing apparatuses, the instructions performing a series of operation steps on the computer or other programmable data processing apparatuses to create processes executed by the computer, thereby executing the computer or other programmable data processing apparatuses may also provide steps for performing the functions described in a block(s) of the flowchart.

In addition, each block may represent some of modules, segments, or codes including one or more executable instructions for executing a specific logical function(s). Further, it is to be noted that functions mentioned in the blocks occur regardless of a sequence in some alternative embodiments. For example, two blocks that are continuously illustrated may be simultaneously performed in fact or be performed in a reverse sequence depending on corresponding functions.

The term '~unit' used in this embodiment refers to a software or hardware component, and '~unit' performs certain roles. However, the '~unit' is not meant to be limited to the software or hardware. The '~unit' may be configured to be stored in a storage medium that can be addressed or may be configured to reproduce one or more processors. Accordingly, as an example, the '~unit' includes components such as software components, object-oriented software components, class components, and task components, processes, functions, attributes, procedures, subroutines, segments of program code, drivers, firmware, microcode, circuits, data, databases, data structures, tables, arrays and variables. Components and functions provided within '~unit' may be combined into a smaller number of components and '~unit' or may be further separated into additional components and '~unit'. In addition, components and '~ units' may be implemented to reproduce one or more CPUs in a device or a secure multimedia card. In addition, in an embodiment, the '~unit' may include one or more processors.

In the present disclosure, a user equipment (UE) may be referred to as a terminal, a mobile station (MS), a cellular phone, a smartphone, a computer, or various electronic devices capable of performing communication functions.

In addition, the embodiment of the present disclosure may be applied to other communication systems with similar technical backgrounds or channel formats to the embodiment of the present disclosure described below. In addition, embodiments of the present disclosure may be applied to other communication systems through certain modifications, as determined by those skilled in the art, without significantly departing from the scope of the present disclosure.

In describing in detail the embodiments of the present disclosure, the communication system may utilize various wired or wireless communication systems. For example, the 3GPP, which is a wireless communication standards organization, may utilize a new RAN (NR) which is a radio access network on the 5G communication standard, and a packet core (5G system, 5G core network, or NG core: next generation core) which is a core network. In addition, the present disclosure can also be applied, with minor modifications, to other communication systems having similar technical backgrounds, without significantly departing from the scope of the present disclosure, which will be possible according to the determination of a person having ordinary skill in the art to which the present disclosure pertains.

Hereinafter, terms for identifying access nodes, terms referring to network entities (NFs), terms referring to messages, terms referring to interfaces between network functions (NFs), terms referring to various pieces of identification information, and the like, used in the present disclosure are exemplified for the convenience of description. Accordingly, the present disclosure is not limited to terms described below, and other terms referring to objects having equivalent technical meanings may be used.

The present disclosure provides a method and apparatus for reflecting application-level characteristics in quality-of-service (QoS) policies and packet processing in a wireless communication system, so as to well satisfy a user's perceived performance in ultra-high-speed, low-latency communications such as XR services in the wireless communication system. In particular, the present disclosure relates to a method for supporting PDU set QoS for uplink (UL) data.

Specifically, the 5G system supports network slices, and traffic for different network slices may be processed by different protocol data unit (PDU) sessions. The PDU session may refer to an association between a data network providing a PDU connection service and a UE. The network slice may be understood as a technology that logically configures a network as a set of network functions (NFs) for supporting various services with different characteristics, such as broadband communication services, massive IoT, and mission critical services such as V2X, and separates different network slices. Therefore, even if a communication failure occurs in any network slice, the communication in other network slices is not affected, enabling the provision of stable communication services. In the present disclosure, the "slice" may be used interchangeably with the term "network slice". In such a network environment, a UE may access multiple network slices when receiving various services. In addition, the network function (NF) may be implemented as a network element as a software instance running on hardware or as a virtualized function instantiated on an appropriate platform.

A mobile communication operator may configure the network slices and allocate network resources appropriate for a specific service on a per-network slice basis or on a per-set of network slices basis. The network resources may refer to NFs, logical resources provided by the NF, wireless resource allocation from a base station, or the like.

For example, a mobile communication operator may configure network slice A for providing mobile broadband services, network slice B for providing vehicular communication services, and network slice C for providing XR services to be described below. For example, the 5G network may efficiently provide relevant services to UEs through network slices specialized for the characteristics of each service. In the 5G system, the network slice may be represented as single-network slice selection assistance information (S-NSSAI). The S-NSSAI may include a slice/service type (SST) value and a slice differentiator (SD) value. The SST may represent the characteristics (e.g., enhanced mobile broadband (eMBB), IoT, ultra reliability low latency communication (URLLC), V2X, XR services, etc.) of services supported by the network slice. The SD may be a value used as an additional identifier for a specific service referred to as the SST.

Examples of services requiring high data rate and low latency (HDRLL) may include extended reality (XR) services, augmented reality (AR) services, virtual reality (VR) services, or cloud gaming services, etc. The VR services provide a virtual environment implemented on a computer apparatus using a VR headset, etc. The AR service may be a service that combines a real world with a virtual environment using location, geographic information, etc. The XR service may not only combine a real environment and a virtual environment, but also provide a user with tactile, auditory, olfactory information, etc., enhancing a user's perceived level.

In describing communication services that provide the application-based QoS in the present disclosure, embodiments of the present disclosure have been described based on the XR services for convenience. However, the present disclosure can be applied even to various data services as well as the XR services. Therefore, it is to be noted that the embodiments of the present disclosure are not limited to the XR services.

According to the present disclosure, when various types of XR service data, such as audio, video, and haptic, are delivered to a user, a packet corresponding to an application data unit (ADU) becomes meaningful information for a UE only when the packet is delivered to the UE based on the characteristics of the application. In this case, when a packet belonging to an ADU is not transmitted properly or the transmission of a certain packet fails, even if the transmitted packet belonging to the ADU is delivered to the UE, the ADU information may not be delivered to the user. In this case, if a packet that is not properly displayed on the UE even when delivered is not delivered via the communication network, resources for transmitting unnecessary packets may be saved, which may help the performance of the communication network. In addition, when an application for providing a service to a user generates application data units (ADUs) based on the characteristics of the media, and packets corresponding to the ADUs are transmitted through a communication network to generate traffic, each ADU may be correlated with one another based on the characteristics of the media. For example, a specific ADU is very important, and includes essential information when transmitting information to a user. Furthermore, for some ADUs, even if the packet corresponding to the ADU is transmitted to a UE, the ADU may not be displayed to a user without the important ADU. In this way, the relationships and importance of different ADUs may be determined depending on the ADU. That is, for example, when packets of a certain ADU are transmitted, packets of ADUs having a lower importance and a higher correlation than the ADU may be scheduled by being processed with a lower priority in scheduling and packet processing, or may be discarded when necessary. As described above, by processing packets using the application-level information, network resources can be used more efficiently, thereby improving the user's quality of experience.

The ADU may be viewed as a collection of media units (MUs) or packet data units (PDUs) from a communications network perspective, and thus may be referred to as a PDU set. In describing the present disclosure, the ADU, the MU, and the PDU set may be used interchangeably, but may be fundamentally understood as the same concept. However, the ADU and the MU may be viewed as units of application data that exist outside the communication network or are delivered to the communication network, and when the ADU is serviced within the communication network, the ADU may be referred to as a PDU set.

When the packets corresponding to the ADU are serviced on the communication network, the existing packet-level QoS processing is the default, and application-level QoS processing is additionally applied as needed. Furthermore, to process the application-level QoS in the communication network, in the case of downlink (DL) data, a PDU session anchor (PSA) UPF of the communication network includes some information in a GTP header of a packet based on characteristics of an ADU, thereby enabling the application-level QoS processing within the communication network, such as within the UPF or RAN.

In particular, the present document describes a method for processing UL data traffic, and will be described focusing on a method for identifying PDU set-level information, for example, PDU set information of UL data traffic provided from a higher layer of a UE and controlling data processing based on the characteristics of the PDU set.

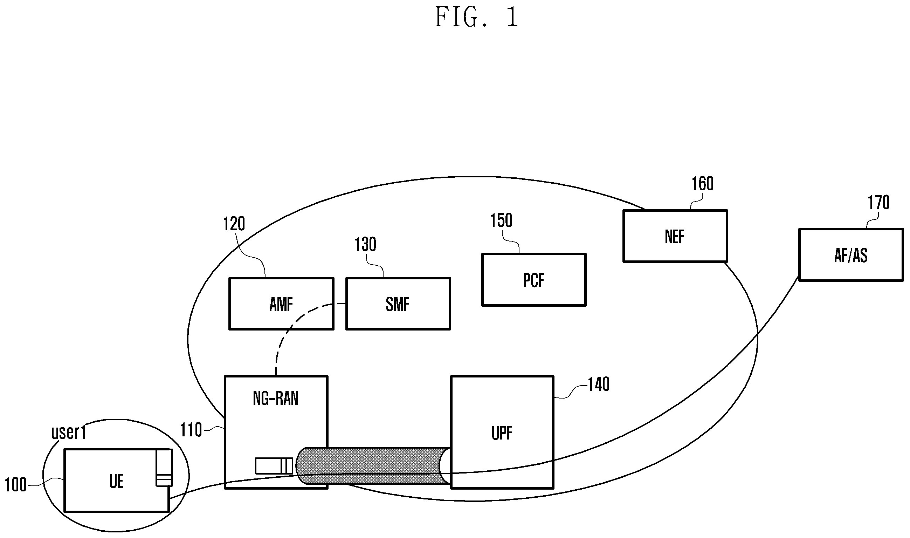

FIG. 1 is a diagram illustrating an example of an application data transmission path in a wireless communication system according to an embodiment of the present disclosure.

The example in FIG. 1 illustrates transmission paths via which XR data according to XR services used by a user (user 1) is delivered over an UL from a UE to an application function (AF)/application server (AS) via a next generation-radio access network (NG-RAN) node and a user plane function (UPF).

In the present disclosure, network technology may refer to standard specifications (e.g., TS 23.501, TS 23.502, TS 23.503, etc.) defined by the International Telecommunication Union (ITU) or 3GPP, and each component included in network architecture of FIG. 1 may mean a physical entity, or may mean software performing an individual function, or hardware combined with software. In the drawings, reference numerals denoted by Nx, such as N1, N2, N3,..., represent known interfaces between NFs in a 5G core network (CN), and since the related description may refer to the standard specification (TS 23.501), a detailed description thereof will be omitted. In addition, since the basic related description of a handover procedure may refer to the standard specification (TS 23.502), a detailed description of the handover procedure may be omitted in the description of the present patent technology as needed.

The wireless communication system of FIG. 1 includes a radio access network (NG-RAN) and a 5G core network (5GC). The NG-RAN 110 may be a base station (e.g., gNB, integrated access and backhaul (IAB), etc.) that supports radio access technology in the 5G system. The NG-RAN 110 may provide XR service-related information and/or data delivered from an AF/AS 170 of an external network via the core network (e.g., 5GC) to at least one UE 100 including XR devices. In addition, the NG-RAN 110 may provide the XR service-related information and/or data received from the at least one UE 100 to the AF/AS 170.

According to an embodiment, the 5GC in FIG. 1 may include network entities such as an access and mobility management function (AMF) 120, a session management function (SMF) 130, a user plane function (UPF) 140, and a policy control function (PCF) 150.

The AMF 120 is an entity for managing access and mobility of the UE 100. The AMF 120 may serve as a UE-core network endpoint that connects the UE 100 to other entities of the 5GC via the NG-RAN 110. For example, the AMF 120 may perform network functions such as registration, connection, reachability, mobility management, access verification, authorization, and mobility event generation of the UE 100.

The SMF 130 may perform a management function for the protocol data unit (PDU) session of the UE 100. For example, the SMF 130 may perform network functions, such as a session management function through establishment, modification, and release of a session and maintenance of a tunnel between the UPF 140 and the NG-RAN 110 required therefor, an allocation and management function of an Internet protocol (IP) address of the UE 100, user plane selection and control, traffic processing control in the UPF, and charging data collection control.

The UPF 140 may serve to process user data (e.g., XR data) of the UE 100, and serve to process XR data so that the XR data generated by the UE 100 may be delivered to the AF/AS 170 or data input from the AF/AS 170 may be delivered to the UE 100. For example, the UPF 140 may perform network functions such as serving as an anchor between radio access technologies (RATs), providing connection between a PDU session and an AF/AS, routing and forwarding packets, inspecting packets, applying user plane policies, generating traffic usage reports, and buffering.

The PCF 150 is an NF that manages operator policy information for providing services in the 5G system. The NEF 160 may deliver or receive events occurring in the 5G system and supported capabilities to and from the external AF/AS 170. For example, the NEF 160 may perform functions such as safely supplying the information on the AF/AS 170 to the 5GC, converting internal/external information, and storing information received from other NFs in the UDR and then redistributing the information.

The UE 100 may access the NG-RAN 110 and register with the 5G system. For example, the UE 100 may access the NG-RAN 110 to perform a UE registration procedure with the AMF 120. During the registration procedure, the AMF 120 may determine a network slice available to the UE accessing the NG-RAN 110 and allocate the determined network slice to the UE 100. The UE 100 may select the network slice to establish the PDU session for communication with the AF/AS 170. One PDU session may include one or more quality of service (QoS) flows. Each QoS flow may provide different transmission performances required for each application service by configuring different QoS parameters.

In particular, the present disclosure assumes that the UE 100 and the NG-RAN 110 exchange, with each other, UL PDU set handling capability of the UE 100 at an access stratum (AS) level, such that the UE 100 identifies whether the UL PDU set handling may be applied via the NG-RAN 110 node.

For example, the function corresponding to the UL PDU set handling may include some or all of a function that enables the UE 100 to identify PDU set information from UL data traffic, a function that discards all PDUs corresponding to a certain PDU set in UL data traffic, or a function that differentiates scheduling according to PDU set importance in consideration of importance information of the PDU set in UL data traffic.

Whether the UL PDU set handling capability of the UE 100 is exchanged between the UE 100 and the NG-RAN 110 may be mutually recognized by the UE 100 and the NG-RAN 110 through a procedure in which the NG-RAN 110 checks the capability of the UE 100 during an access procedure of the UE 100 to the NG-RAN 110.

The PDU Set information may include a sequence number of the PDU set to which the PDU of data traffic belongs, a PDU Set importance level, the total size of the PDU set, or some or all of sequence numbers of PDUs within that PDU set.

Furthermore, in the present disclosure, the UL PDU set handling capability of the UE may be used interchangeably with the same meaning as the UL PDU set QoS handling capability, but when they need to be distinguished, the UL PDU set handling and the UL PDU set QoS handling are used in a separately mentioned manner.

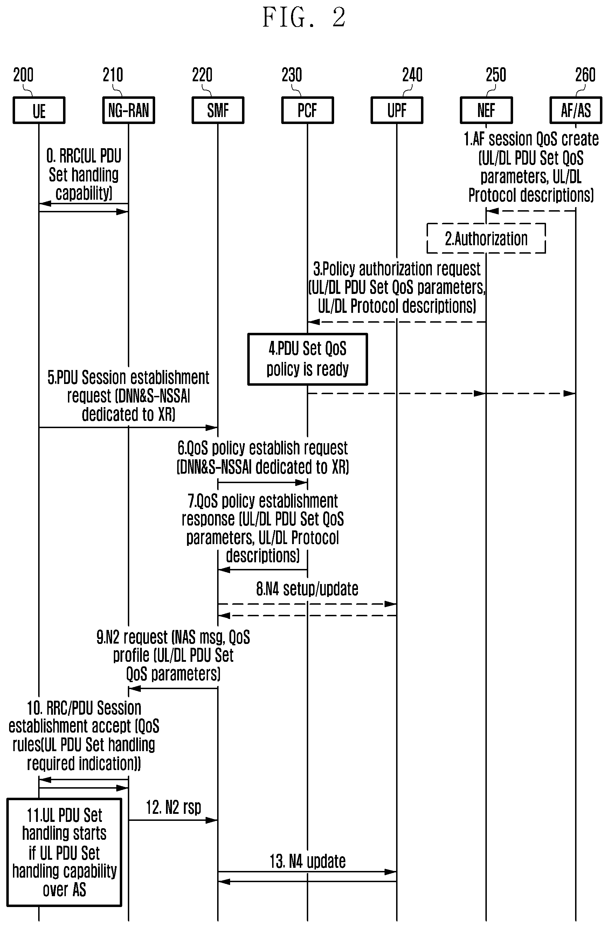

FIG. 2 is a diagram illustrating a method for triggering a UE to provide PDU set QoS for UL data traffic in a wireless communication system according to an embodiment of the present disclosure.

According to the embodiment illustrated in FIG. 2, even if the UE does not notify the SMF of its own UL PDU set handling capability, in the case of the network slice used for XR, the UE may be notified of the need for UL PDU set handling, so the UE may perform the UL PDU set handling.

Referring to FIG. 2, as in step 0, when a UE 200 accesses an NG-RAN 210, the UE 200 may deliver its own capability according to the request of the NG-RAN 210. In this case, when the UE 200 has a capability to process a PDU set for UL data, the UE 200 may deliver the capability to the NG-RAN 210. According to an embodiment, the UE 200 may notify its capability to process the PDU set by notifying some or all of the following: a capability to discard all PDUs within a single PDU set simultaneously on a per-PDU set basis when required; a capability to apply differentiated scheduling for each PDU set according to its importance in congestion situations; or a capability to identify PDU set information.

In addition, the UE 200 may also identify whether the NG-RAN 210 (e.g., a base station) is an NG-RAN having a capability capable of processing the UL PDU set.

In step 1, an application function (AF)/application server (AS) 260 may deliver an AS session QoS create message or an AS session QoS update message to a PCF 230 via an NEF 250, including QoS information at a PDU set level for which it wants to receive service and protocol description which is information that may assist in identifying PDU set information in a communication network. The QoS information at the PDU set level is expressed as a PDU set QoS parameter and may include, for example, a PDU set delay budget (PSDB), a PDU set error rate (PSER), or PDU set integrated handling information (PSIHI) indicating whether all PDUs in the PDU set are required. The protocol description may include information on a transport protocol, such as an RTP protocol, or information on a data encoding protocol type or encoding rate-related methods, for example, information on MPEG-1, H.262/MPEG-2, H.263, H.264/MPEG-4 AVC, and HEVC that support a group of picture (GOP), etc.

In particular, the PDU set QoS parameters and the protocol description may be used separately for UL and DL, or may be used for the UL and the DL without distinction by applying the same value to both the UL and DL.

Authorization may be performed at the NEF 250 according to the request in step 1. When authorized, the NEF 250 may deliver the received PDU set QoS parameters and protocol description to the PCF 230, as in step 3. In step 4, the PCF 230 may acquire a PDU set QoS policy for the corresponding QoS flow or media flow. The PDU set QoS policy may be stored in the PCF 230 or received from the AS/AF 260 through the processes as in steps 1/2/3.

The above process is performed in such a manner that the UE 200 establishes the corresponding PDU session and then updates the PDU set QoS policy with respect to the PDU session. The above process may follow the same procedure as a general QoS policy update process. For the convenience of description, the embodiment of the present disclosure has been described focusing on performing the PDU session establishment after completing steps 1/2/3/4. However a scheme that operates such that, a PDU set QoS policy is updated, and the corresponding QoS policy update is applied through PDU session modification in order to apply the updated QoS policy may also be implemented according to embodiments. Even in this case, the scheme may follow a general PDU session modification procedure. In addition, the following information is delivered during the PDU session modification procedure: information provided to the UE 200 and the NG-RAN 210 including values resulting from the update, for example, information indicating that the QoS profile provided to the NG-RAN 210 includes the UL PDU set QoS parameters; information indicating that the QoS rule provided to the UE 200 includes an indication indicating that the UL PDU set handling is required or includes the UL protocol description that may help the UE 200 identify the PDU set information; or information indicating that a QoS profile including UL PDU set QoS parameters is provided to the UE 200. In the case of the UL protocol description or the UL PDU set QoS parameters, the protocol description and the PDU set QoS parameters may be generally used for both UL and DL without distinguishing between the UL and DL.

According to an embodiment, a part where the UE 200 applies the UL PDU set through the PDU session establishment process is described. As in step 5, the UE 200 may transmit a PDU session establishment request including network slice information dedicated to XR to the SMF 220. The SMF 220 may request the QoS policy from the PCF 230 as in step 6. As in step 7, the SMF 220 may receive the UL PDU set QoS parameters and the UL protocol description to be applied to the PDU set. As in step 9, the SMF 220 may deliver, to the NG-RAN 210, the QoS profile including the UL PDU set QoS parameters according to the received QoS policy information. As in step 10, the SMF 220 may deliver, to the UE 200, a message, such as a PDU session establishment accept message, including a QoS rule indicating that UL PDU set handling is required or permitted. Meanwhile, the UE 200 that has received the QoS rule may apply the UL PDU set handling to the corresponding QoS flow as in step 11. Meanwhile, when the UE 200 starts to apply the UL PDU set handling, the UE 200 may search for the PDU set information for UL PDU through information such as an RTP extended header generated in the higher layer for the corresponding QoS flow, and may perform a process of identifying an importance value of a corresponding PDU set, a sequence number of the PDU set, size information of the PDU set, a sequence number of PDUs within the PDU set, or whether a PDU is a last PDU of the PDU set. Accordingly, the UE 200 may perform a process of requesting resources for transmitting UL data from the NG-RAN 210 in consideration of the PDU set information.

However, even if the UE 200 receives a notification from the SMF 220 that the UL PDU set handling is required or permitted, when the UE 200 does not have UL PDU set handling capability or the NG-RAN 210 that the UE 200 is accessing does not have the UL PDU set handling capability, the UE 200 may not perform the PDU set handling on UL data traffic and may provide service according to handling for general PDUs.

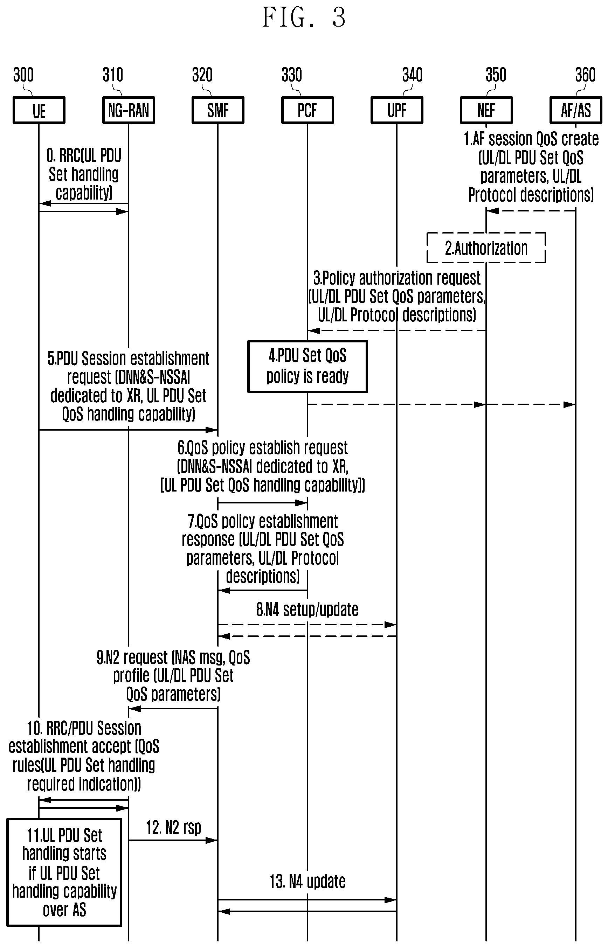

Meanwhile, FIG. 3 is a diagram illustrating a method for triggering a UE to provide PDU set QoS for UL data traffic in a wireless communication system according to an embodiment of the present disclosure.

According to the embodiment of FIG. 3, a UE 300 notifies an SMF 320 of its own UL PDU set handling capability and notifies that UL PDU set handling is required only for the UE 300 having the capability, thereby enabling the UE 300 to perform the UL PDU set handling.

Referring to FIG. 3, as in step 0, when the UE 300 accesses an NG-RAN 310, the UE 300 may deliver its own capability according to the request of the NG-RAN 310. In this case, when the UE 300 has a capability to process a PDU set for UL data, the UE 300 may deliver the capability to the NG-RAN 310. According to an embodiment, the UE 300 may notify its capability to process the PDU set by notifying some or all of the following: a capability to discard all PDUs within a single PDU set simultaneously on a per-PDU set basis when required; a capability to apply differentiated scheduling for each PDU set according to its importance in congestion situations; or a capability to identify PDU set information.

In addition, the UE 300 may also identify whether the NG-RAN 310 (e.g., a base station) is an NG-RAN having a capability capable of processing the UL PDU set.

In step 1, an application function (AF)/application server (AS) 360 may deliver an AS session QoS create message or an AS session QoS update message to a PCF 330 via an NEF 350, including QoS information at a PDU set level for which it wants to receive service and protocol description which is information that may assist in identifying PDU set information in a communication network. The QoS information at the PDU set level is expressed as a PDU set QoS parameter and may include, for example, a PDU set delay budget (PSDB), a PDU set error rate (PSER), or PDU set integrated handling information (PSIHI) indicating whether all PDUs in the PDU set are required. The protocol description may include information on a transport protocol, such as an RTP protocol, or information on a data encoding protocol type or encoding rate-related methods, for example, information on MPEG-1, H.262/MPEG-2, H.263, H.264/MPEG-4 AVC, and HEVC that support a group of picture (GOP), etc.

In particular, the PDU set QoS parameters and the protocol description may be used separately for UL and DL, or may be used for the UL and the DL without distinction by applying the same value to both the UL and DL.

Authorization may be performed at the NEF 350 according to the request in step 1. When authorized, the NEF 350 may deliver the received PDU set QoS parameters and protocol description to the PCF 330, as in step 3. In step 4, the PCF 330 may acquire a PDU set QoS policy for the corresponding QoS flow or media flow. The PDU set QoS policy may be stored in the PCF 330 or received from the AS/AF 360 through the processes as in steps 1/2/3.

The above process is performed in such a manner that the UE 300 establishes the corresponding PDU session and then updates the PDU set QoS policy with respect to the PDU session. The above process may follow the same procedure as a general QoS policy update process. For the convenience of description, the embodiment of the present disclosure has been described focusing on performing the PDU session establishment after completing steps 1/2/3/4. However a scheme that operates such that, a PDU set QoS policy is updated, and the corresponding QoS policy update is applied through PDU session modification in order to apply the updated QoS policy may also be implemented according to embodiments. Even in this case, the scheme may follow a general PDU session modification procedure. In addition, the following information is delivered during the PDU session modification procedure: information provided to the UE 300 and the NG-RAN 310 including values resulting from the update, for example, information indicating that the QoS profile provided to the NG-RAN 310 includes the UL PDU set QoS parameters; information indicating that the QoS rule provided to the UE 300 includes an indication indicating that the UL PDU set handling is required or includes the UL protocol description that may help the UE 300 identify the PDU set information; or information indicating that a QoS profile including UL PDU set QoS parameters is provided to the UE 300. In the case of the UL protocol description or the UL PDU set QoS parameters, the protocol description and the PDU set QoS parameters may be generally used for both UL and DL without distinguishing between the UL and DL.

According to an embodiment, a part where the UE 300 applies the UL PDU set through the PDU session establishment process is described. As in step 5, the UE 300 may transmit a PDU session establishment request including network slice information dedicated to XR to the SMF 320. In this case, when the UE 300 has UL PDU set handling capability, the UE 300 may transmit an indicator indicating the capability to the SMF 320.

The SMF 320 may request the QoS policy from the PCF 330 as in step 6. In this case, the SMF 320 may deliver not only information indicating that the PDU session requested by the UE 300 is a DNN or a network slice dedicated to XR, but also the UL PDU set handling capability of the UE 300.

Therefore, in step 7, when the PCF 330 has an UL PDU set QoS policy for the request, the PCF 330 may deliver the PDU set QoS parameters and protocol description to the SMF 320 to be applied to the PDU set. In this case, the PCF 330 may transmit the UL PDU set QoS parameters and the UL protocol description to the SMF 320 only when the UE 300 has the UL PDU set handling capability. However, when the PCF 330 does not receive information on the UL PDU set handling capability for the UE 300, the PCF 330 may transmit the UL PDU set QoS parameters and UL protocol description to the SMF 320 when there is the UL PDU set QoS policy.

When the SMF 320 receives the UL PDU set QoS parameters and UL protocol description to be applied to the PDU set, the SMF 320 may transmit the QoS profile including the UL PDU set QoS parameters to the NG-RAN 310 as in step 9 according to the received QoS policy information. As in step 10, the SMF 320 may deliver, to the UE 300, a message, such as a PDU session establishment accept message, including a QoS rule indicating that UL PDU set handling is required or permitted. Meanwhile, the UE 300 that has received the QoS rule may apply the UL PDU set handling to the corresponding QoS flow as in step 11. Meanwhile, when the UE 300 starts to apply the UL PDU set handling, the UE 300 may search for the PDU set information for UL PDU through information such as an RTP extended header generated in the higher layer for the corresponding QoS flow, and may perform a process of identifying an importance value of a corresponding PDU set, a sequence number of the PDU set, size information of the PDU set, a sequence number of PDUs within the PDU set, or whether a PDU is a last PDU of the PDU set. Accordingly, the UE 300 may perform a process of requesting resources for transmitting UL data from the NG-RAN 310 in consideration of the PDU set information.

However, even if the UE 300 receives a notification from the SMF 320 that the UL PDU set handling is required or permitted, when the NG-RAN 310 to which the UE 300 is accessing does not have the UL PDU set handling capability, the UE 300 may not perform the PDU set handling on the UL data traffic and may provide service according to handling for general PDUs.

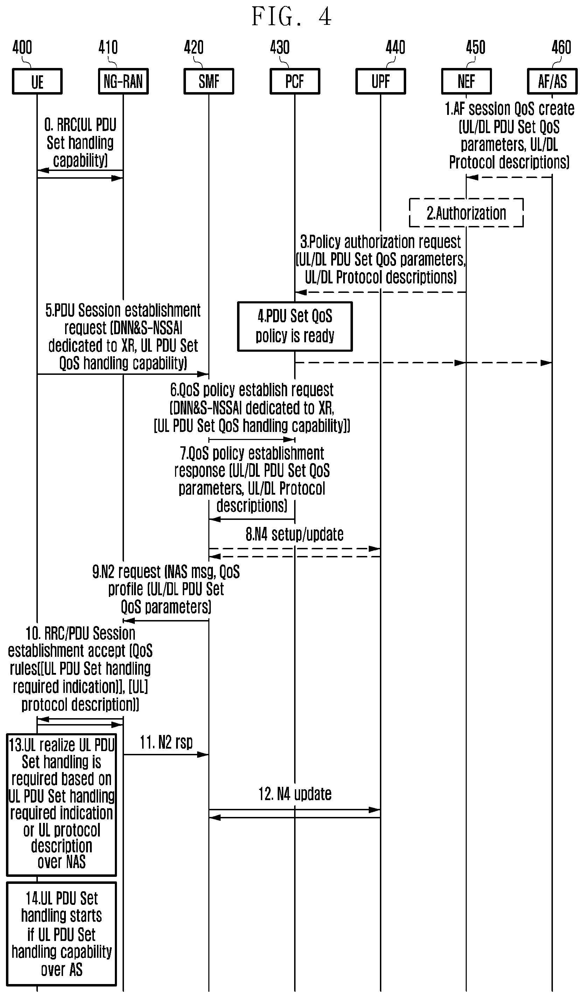

FIG. 4 is a diagram illustrating a method for triggering a UE to provide PDU set QoS for UL data traffic in a wireless communication system according to an embodiment of the present disclosure.

According to the embodiment of FIG. 4, a UE 400 notifies an SMF 420 of its own UL PDU set handling capability and notifies that UL PDU set handling is required only for the UE 400 having the capability, thereby enabling the UE 400 to perform the UL PDU set handling.

Referring to FIG. 4, as in step 0, when the UE 400 accesses an NG-RAN 410, the UE 400 may deliver its own capability according to the request of the NG-RAN 410. In this case, when the UE 400 has a capability to process a PDU set for UL data, the UE 400 may deliver the capability to the NG-RAN 410. According to an embodiment, the UE 400 may notify its capability to process the PDU set by notifying some or all of the following: a capability to discard all PDUs within a single PDU set simultaneously on a per-PDU set basis when required; a capability to apply differentiated scheduling for each PDU set according to its importance in congestion situations; or a capability to identify PDU set information.

In addition, the UE 400 may also identify whether the NG-RAN 410 (e.g., a base station) is an NG-RAN having a capability capable of processing the UL PDU set.

In step 1, an application function (AF)/application server (AS) 460 may deliver an AS session QoS create message or an AS session QoS update message to a PCF 430 via an NEF 450, including QoS information at a PDU set level for which it wants to receive service and protocol description which is information that may assist in identifying PDU set information in a communication network. The QoS information at the PDU set level is expressed as a PDU set QoS parameter and may include, for example, a PDU set delay budget (PSDB), a PDU set error rate (PSER), or PDU set integrated handling information (PSIHI) indicating whether all PDUs in the PDU set are required. The protocol description may include information on a transport protocol, such as an RTP protocol, or information on a data encoding protocol type or encoding rate-related methods, for example, information on MPEG-1, H.262/MPEG-2, H.263, H.264/MPEG-4 AVC, and HEVC that support a group of picture (GOP), etc.

In particular, the PDU set QoS parameters and the protocol description may be used separately for UL and DL, or may be used for the UL and the DL without distinction by applying the same value to both the UL and DL.

Authorization may be performed at the NEF 450 according to the request in step 1. When authorized, the NEF 450 may deliver the received PDU set QoS parameters and protocol description to the PCF 430, as in step 3. In step 4, the PCF 430 may acquire a PDU set QoS policy for the corresponding QoS flow or media flow. The PDU set QoS policy may be stored in the PCF 430 or received from the AS/AF 460 through the processes as in steps 1/2/3.

The above process is performed in such a manner that the UE 400 establishes the corresponding PDU session and then updates the PDU set QoS policy with respect to the PDU session. The above process may follow the same procedure as a general QoS policy update process. For the convenience of description, the embodiment of the present disclosure has been described focusing on performing the PDU session establishment after completing steps 1/2/3/4. However a scheme that operates such that, a PDU set QoS policy is updated, and the corresponding QoS policy update is applied through PDU session modification in order to apply the updated QoS policy may also be implemented according to embodiments. Even in this case, the scheme may follow a general PDU session modification procedure. In addition, the following information is delivered during the PDU session modification procedure: information provided to the UE 400 and the NG-RAN 410 including values resulting from the update, for example, information indicating that the QoS profile provided to the NG-RAN 410 includes the UL PDU set QoS parameters; information indicating that the QoS rule provided to the UE 400 includes an indication indicating that the UL PDU set handling is required or includes the UL protocol description that may help the UE 400 identify the PDU set information; or information indicating that a QoS profile including UL PDU set QoS parameters is provided to the UE 400. In the case of the UL protocol description or the UL PDU set QoS parameters, the protocol description and the PDU set QoS parameters may be generally used for both UL and DL without distinguishing between the UL and DL.

According to an embodiment, a part where the UE 400 applies the UL PDU set through the PDU session establishment process is described. As in step 5, the UE 400 may transmit a PDU session establishment request including network slice information dedicated to XR to the SMF 420. In this case, when the UE 400 has UL PDU set handling capability, the UE 400 may transmit an indicator indicating the capability to the SMF 420.

The SMF 420 may request the QoS policy from the PCF 430 as in step 6. In this case, the SMF 420 may deliver not only information indicating that the PDU session requested by the UE 400 is a DNN or a network slice dedicated to XR, but also the UL PDU set handling capability of the UE 400.

Therefore, in step 7, when the PCF 430 has an UL PDU set QoS policy for the request, the PCF 430 may deliver the PDU set QoS parameters and protocol description to the SMF 420 to be applied to the PDU set. In this case, the PCF 430 may transmit the UL PDU set QoS parameters and the UL protocol description to the SMF 420 only when the UE 400 has the UL PDU set handling capability. However, when the PCF 430 does not receive information on the UL PDU set handling capability for the UE 400, the PCF 430 may transmit the UL PDU set QoS parameters and UL protocol description to the SMF 420 when there is the UL PDU set QoS policy.

When the SMF 420 receives the UL PDU set QoS parameters and UL protocol description to be applied to the PDU set, the SMF 420 may transmit the QoS profile including the UL PDU set QoS parameters to the NG-RAN 410 as in step 9 according to the received QoS policy information. As in step 10, the SMF 420 may deliver, to the UE 400, a message, such as a PDU session establishment accept message, including a QoS rule indicating that UL PDU set handling is required or permitted. Alternatively, the message transmitted by the SMF 420 to the UE 400 may be delivered to the UE 400, including the UL protocol description.

Meanwhile, the UE 400, which receives information indicating that the UL PDU set handling is required or permitted or receives the UL protocol description as described above, may recognize that the UL PDU set handling may be applied to the corresponding QoS flow as in step 13. Meanwhile, when the UE 400 starts to apply the UL PDU set handling as in step 14, the UE 400 may search for the PDU set information for UL PDU through information such as an RTP extended header generated in the higher layer by referring to the protocol description information received for the corresponding QoS flow, and may perform a process of identifying an importance value of a corresponding PDU set, a sequence number of the PDU set, size information of the PDU set, a sequence number of PDUs within the PDU set, or whether a PDU is a last PDU of the PDU set. Accordingly, the UE 400 may perform a process of requesting resources for transmitting UL data from the NG-RAN 410 in consideration of the PDU set information.

However, even if the UE 400 receives a notification from the SMF 420 that the UL PDU set handling is required or is permitted or receives the UL protocol description, when the NG-RAN 310 to which the UE is accessing does not have the UL PDU set handling capability, the UE 400 may not perform the PDU set handling on the UL data traffic and may provide service according to handling for general PDUs.

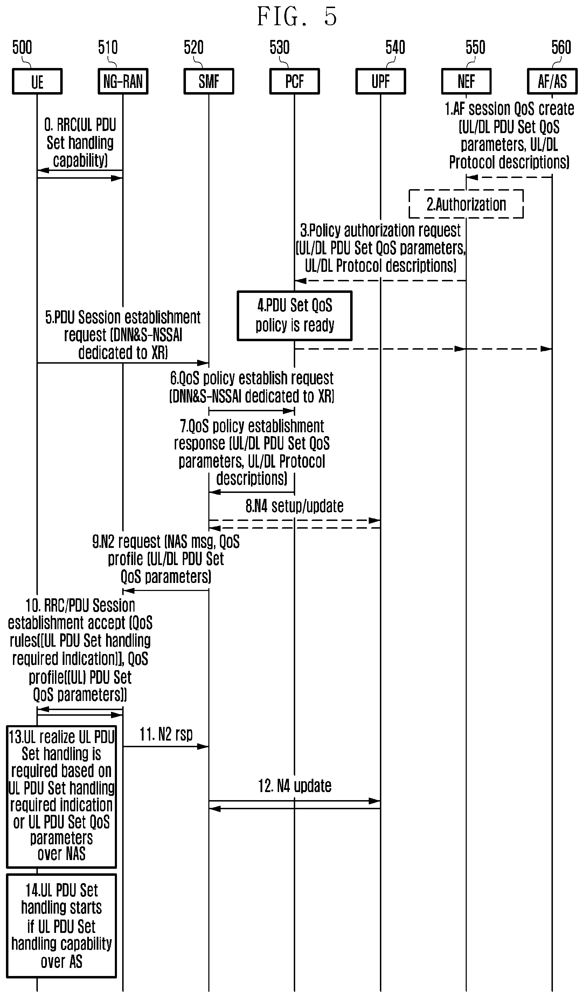

Meanwhile, FIG. 5 is a diagram illustrating a method for triggering a UE to provide PDU set QoS for UL data traffic in a wireless communication system according to an embodiment of the present disclosure.

According to the embodiment illustrated in FIG. 5, even if a UE 500 does not notify an SMF 520 of its own UL PDU set handling capability, in the case of the network slice used for XR, the UE 500 may be notified of the need for UL PDU set handling, so the UE 500 may perform the UL PDU set handling.

Referring to FIG. 5, as in step 0, when the UE 500 accesses an NG-RAN 510, the UE 500 may deliver its own capability according to the request of the NG-RAN 510. In this case, when the UE 500 has a capability to process a PDU set for UL data, the UE 500 may deliver the capability to the NG-RAN 510. According to an embodiment, the UE 500 may notify its capability to process the PDU set by notifying some or all of the following: a capability to discard all PDUs within a single PDU set simultaneously on a per-PDU set basis when required; a capability to apply differentiated scheduling for each PDU set according to its importance in congestion situations; or a capability to identify PDU set information.

In addition, the UE 500 may also identify whether the NG-RAN 510 (e.g., a base station) is an NG-RAN having a capability capable of processing the UL PDU set.

In step 1, an application function (AF)/application server (AS) 560 may deliver an AS session QoS create message or an AS session QoS update message to a PCF 530 via an NEF 550, including QoS information at a PDU set level for which it wants to receive service and protocol description which is information that may assist in identifying PDU set information in a communication network. The QoS information at the PDU set level is expressed as a PDU set QoS parameter and may include, for example, a PDU set delay budget (PSDB), a PDU set error rate (PSER), or PDU set integrated handling information (PSIHI) indicating whether all PDUs in the PDU set are required. The protocol description may include information on a transport protocol, such as an RTP protocol, or information on a data encoding protocol type or encoding rate-related methods, for example, information on MPEG-1, H.262/MPEG-2, H.263, H.264/MPEG-4 AVC, and HEVC that support a group of picture (GOP), etc.

In particular, the PDU set QoS parameters and the protocol description may be used separately for UL and DL, or may be used for the UL and the DL without distinction by applying the same value to both the UL and DL.

Authorization may be performed at the NEF 550 according to the request in step 1. When authorized, the NEF 550 may deliver the received PDU set QoS parameters and protocol description to the PCF 530, as in step 3. In step 4, the PCF 530 may acquire a PDU set QoS policy for the corresponding QoS flow or media flow. The PDU set QoS policy may be stored in the PCF 530 or received from the AS/AF 560 through the processes as in steps 1/2/3.

The above process is performed in such a manner that the UE 500 establishes the corresponding PDU session and then updates the PDU set QoS policy with respect to the PDU session. The above process may follow the same procedure as a general QoS policy update process. For the convenience of description, the embodiment of the present disclosure has been described focusing on performing the PDU session establishment after completing steps 1/2/3/4. However a scheme that operates such that, a PDU set QoS policy is updated, and the corresponding QoS policy update is applied through PDU session modification in order to apply the updated QoS policy may also be implemented according to embodimentsa. Even in this case, the scheme may follow a general PDU session modification procedure. In addition, the following information is delivered during the PDU session modification procedure: information provided to the UE 500 and the NG-RAN 510 including values resulting from the update, for example, information indicating that the QoS profile provided to the NG-RAN 510 includes the UL PDU set QoS parameters; information indicating that the QoS rule provided to the UE 500 includes an indication indicating that the UL PDU set handling is required or includes the UL protocol description that may help the UE 500 identify the PDU set information; or information indicating that a QoS profile including UL PDU set QoS parameters is provided to the UE 500. In the case of the UL protocol description or the UL PDU set QoS parameters, the protocol description and the PDU set QoS parameters may be generally used for both UL and DL without distinguishing between the UL and DL.

According to an embodiment, a part where the UE 500 applies the UL PDU set through the PDU session establishment process is described. As in step 5, the UE 500 may transmit a PDU session establishment request including network slice information dedicated to XR to the SMF 520.

The SMF 520 may request the QoS policy from the PCF 530 as in step 6. In this case, the SMF 520 may deliver the information indicating that the PDU session requested by the UE 500 is a DNN or a network slice dedicated to XR.

Therefore, in step 7, when the PCF 530 has the UL PDU set QoS policy for the request, the PCF 530 may transmit, to the SMF 520, the UL PDU set QoS parameters and the UL protocol description.

When the SMF 520 receives the UL PDU set QoS parameters and UL protocol description to be applied to the PDU set, the SMF 520 may transmit the QoS profile including the UL PDU set QoS parameters to the NG-RAN 510 as in step 9 according to the received QoS policy information. As in step 10, the SMF 520 may deliver, to the UE 500, a message, such as a PDU session establishment accept message, including a QoS rule indicating that UL PDU set handling is required or permitted. Alternatively, the message transmitted by the SMF 520 to the UE 500 may be delivered to the UE 500, including the UL PDU set QoS parameters.

Meanwhile, the UE 500, which receives information indicating that the UL PDU set handling is required or permitted, or receives the UL PDU set QoS parameters as described above, may recognize, as in step 13, that the UL PDU set handling may be applied to the corresponding QoS flow. Meanwhile, when the UE 500 starts to apply the UL PDU set handling as in step 14, the UE 500 may search for PDU set information for an UL PDU through the information such as the RTP extended header generated in the higher layer for the corresponding QoS flow, and may perform a process of identifying an importance value of a corresponding PDU set, a sequence number of the PDU set, size information of the PDU set, a sequence number of PDUs within the PDU set, or whether a PDU is a last PDU of the PDU set. Accordingly, the UE 500 may perform a process of requesting resources for transmitting UL data from the NG-RAN 510 in consideration of the PDU set information.

However, even if the UE 500 receives a notification from the SMF 520 that the UL PDU set handling is required or permitted or receives the UL QoS parameters, when the UE 500 does not have UL PDU set handling capability or the NG-RAN 510 that the UE 500 is accessing does not have the UL PDU set handling capability, the UE 500 may not perform the PDU set handling on the UL data traffic and may provide service according to handling for general PDUs.

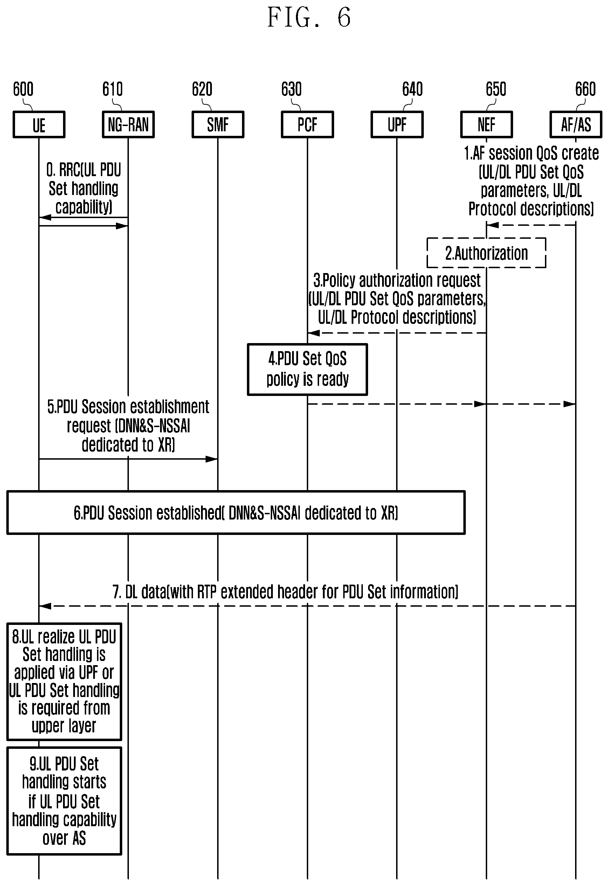

Meanwhile, FIG. 6 is a diagram illustrating a method for triggering a UE to provide PDU set QoS for UL data traffic in a wireless communication system according to an embodiment of the present disclosure.

According to the embodiment illustrated in FIG. 6, even if a UE 600 does not notify an SMF 620 of its own UL PDU set handling capability, in the case of the network slice used for XR, the UE 600 may be notified of the need for UL PDU set handling, so the UE 600 may perform the UL PDU set handling.

Referring to FIG. 6, as in step 0, when the UE 600 accesses an NG-RAN 610, the UE 600 may deliver its own capability according to the request of the NG-RAN 610. In this case, when the UE 600 has a capability to process a PDU set for UL data, the UE 600 may deliver the capability to the NG-RAN 610. According to an embodiment, the UE 600 may notify its capability to process the PDU set by notifying some or all of the following: a capability to discard all PDUs within a single PDU set simultaneously on a per-PDU set basis when required; a capability to apply differentiated scheduling for each PDU set according to its importance in congestion situations; or a capability to identify PDU set information.

In addition, the UE 600 may also identify whether the NG-RAN 610 (e.g., a base station) is an NG-RAN having a capability capable of processing the UL PDU set.

In step 1, an application function (AF)/application server (AS) 660 may deliver an AS session QoS create message or an AS session QoS update message to a PCF 630 via an NEF 650, including QoS information at a PDU set level for which it wants to receive service and protocol description which is information that may assist in identifying PDU set information in a communication network. The QoS information at the PDU set level is expressed as a PDU set QoS parameter and may include, for example, a PDU set delay budget (PSDB), a PDU set error rate (PSER), or PDU set integrated handling information (PSIHI) indicating whether all PDUs in the PDU set are required. The protocol description may include information on a transport protocol, such as an RTP protocol, or information on a data encoding protocol type or encoding rate-related methods, for example, information on MPEG-1, H.262/MPEG-2, H.263, H.264/MPEG-4 AVC, and HEVC that support a group of picture (GOP), etc.

In particular, the PDU set QoS parameters and the protocol description may be used separately for UL and DL, or may be used for the UL and the DL without distinction by applying the same value to both the UL and DL.

Authorization may be performed at the NEF 650 according to the request in step 1. When authorized, the NEF 650 may deliver the received PDU set QoS parameters and protocol description to the PCF 630, as in step 3. In step 4, the PCF 630 may acquire the PDU set QoS policy for the corresponding QoS flow or media flow. The PDU set QoS policy may be stored in the PCF 630 or received from the AS/AF 660 as in steps 1/2/3.

The above process is performed in such a manner that the UE 600 establishes the corresponding PDU session and then updates the PDU set QoS policy with respect to the PDU session. The above process may follow the same procedure as a general QoS policy update process. For the convenience of description, the embodiment of the present disclosure has been described focusing on performing the PDU session establishment after completing steps 1/2/3/4. However a scheme that operates such that, when a PDU set QoS policy is updated, and the corresponding QoS policy update is applied through PDU session modification in order to apply the updated QoS policy may also be implemented according to embodiments. Even in this case, the scheme may follow a general PDU session modification procedure. In addition, the following information is delivered during the PDU session modification procedure: information provided to the UE 600 and the NG-RAN 610 including values resulting from the update, for example, information indicating that the QoS profile provided to the NG-RAN 610 includes the UL PDU set QoS parameters; information indicating that the QoS rule provided to the UE 600 includes an indication indicating that the UL PDU set handling is required or includes the UL protocol description that may help the UE 600 identify the PDU set information; or information indicating that a QoS profile including UL PDU set QoS parameters is provided to the UE 600. In the case of the UL protocol description or the UL PDU set QoS parameters, the protocol description and the PDU set QoS parameters may be generally used for both UL and DL without distinguishing between the UL and DL.

According to an embodiment, a part where the UE 600 applies the UL PDU set through the PDU session establishment process is described. As in step 5, the UE 600 may transmit a PDU session establishment request including network slice information dedicated to XR to the SMF 620.

When the PDU session is established as in step 6, the DL data traffic occurs in the UE 600 as in Step 7, and the extended header of the RTP header of the received data includes a value including the PDU set information, the UE 600 may indirectly detect that the PDU set handling has been applied to the DL data as in step 8. Accordingly, the UE 600 indirectly knows that the UL PDU set handling is required, and when the UE 600 starts to apply the UL PDU set handling as in step 9, the UE may search for the PDU set information for the UL PDU through the information such as the RTP extended header generated by the higher layer for the corresponding QoS flow, and perform a process of identifying the importance value of the corresponding PDU set, the sequence number of the PDU set, the size information of the PDU set, the sequence number of the PDU within the PDU set, or whether a PDU is a last PDU of the PDU set. Accordingly, the UE 600 may perform a process of requesting resources for transmitting UL data from the NG-RAN in consideration of the PDU set information.

However, even if the UE 600 detects that the UL PDU set handling is required, when the NG-RAN 610 that the UE 600 is accessing does not have the UL PDU set handling capability, the UE 600 does not perform the PDU set handling on the UL data traffic and provides service according to handling for general PDUs.

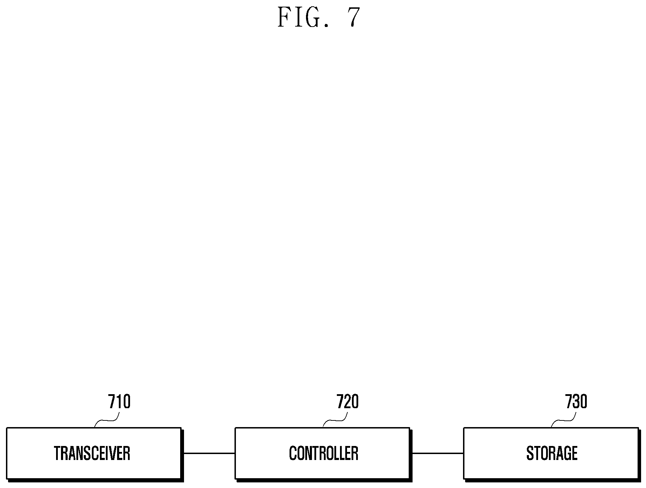

Meanwhile, FIG. 7 is a diagram illustrating a structure of a terminal according to an embodiment of the present disclosure.

Referring to FIG. 7, the terminal may include a transceiver 710, a controller 720, and a storage unit 730. In the present disclosure, the controller 720 may be defined as a circuit, an application-specific integrated circuit, or at least one processor.

The transceiver 710 may transmit and receive signals to and from other network entities. The transceiver 710 may, for example, transmit UE capability information to a base station and transmit a PDU session establishment request message to the SMF.

The controller 720 may control the overall operation of the terminal according to an embodiment of the present disclosure. For example, the controller 720 may control a signal flow between each block to perform operations according to the flowchart described above.

The storage unit 730 may store at least one of the information transmitted and received through the transceiver 710 and the information generated by the controller 920.

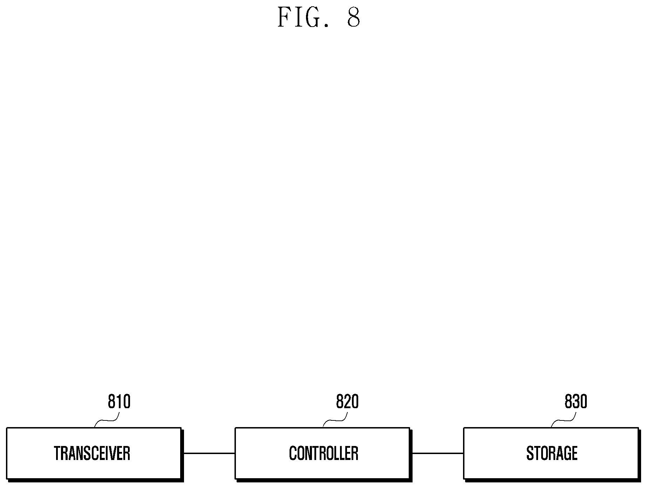

FIG. 8 is a diagram illustrating a network function entity according to an embodiment of the present disclosure. According to an embodiment of the present disclosure, the network function entity of FIG. 8 may be any one of an AMF, an SMF, a PCF, an UPF, a NEF, or a function entity/server such as an AF/AS.

Referring to FIG. 8, the network function entity may include a transceiver 810, a controller 820, and a storage unit 830. In the present disclosure, the controller may be defined as a circuit, an application-specific integrated circuit, or at least one processor.

The transceiver 810 may transmit and receive signals to and from other network entities. According to an embodiment of the present disclosure, in the case of the SMF, the transceiver 810 may receive a PDU session formation request message from a terminal and transmit and receive a QoS policy establishment request/response to and from the PCF.

The controller 820 may control the overall operation of the network function entity according to an embodiment of the present disclosure. For example, the controller 820 may control a signal flow between each block to perform operations according to the flowchart described above.

The storage unit 830 may store at least one of the information transmitted and received through the transceiver 810 and the information generated by the controller 820. In the specific embodiments of the present disclosure described above, components included in the disclosure are expressed in the singular or plural according to the specific embodiments presented. However, the singular or plural expression is appropriately selected for the context presented for convenience of description, and the present disclosure is not limited to the singular or plural components, and even if the component is expressed in plural, the component is configured in singular or even if the component is expressed in singular, the components may be configured in plural.

Meanwhile, the embodiments of the present disclosure disclosed in this specification and drawings are merely specific examples presented to easily describe the technical contents of the present disclosure and to help understanding of the present disclosure, and are not intended to limit the scope of the present disclosure. That is, it is obvious to a person having ordinary skill in the art to which the present disclosure pertains that other modifications based on the technical idea of the present disclosure are possible. In addition, each embodiment may be combined with each other and operated as needed. For example, portions of one embodiment and another embodiment of the present disclosure may be combined with each other to operate a base station and a terminal. In addition, other modifications based on the technical ideas of the above embodiments can be implemented in various systems, such as FDD LTE systems, TDD LTE systems, 5G, or NR systems.

## Claims

1. A method performed by a session management function (SMF) entity in a wireless communication system, the method comprising:
receiving an uplink (UL) protocol description from a policy control function (PCF) entity, - the UL protocol description being transmitted from an application function (AF) entity to the PCF entity; and
transmitting the UL protocol description for UL protocol data unit (PDU) set handling of a terminal.

2. The method of claim 1, wherein the UL protocol description is transmitted along with a quality of service (QoS) rule, and
the QoS rule is associated with a PDU set QoS parameter.

3. The method of claim 2, wherein the UL protocol description and the PDU set QoS parameter are received from the AF entity via the PCF entity.

4. The method of claim 1, wherein the UL protocol description is used for PDU set handling in UL transmission of the terminal.

5. A method performed by a terminal in a wireless communication system, comprising:
transmitting a PDU session establishment request message;
receiving a PDU session establishment accept message including an uplink (UL) protocol description from a session management function (SMF) entity in response to the PDU session establishment request message; and
triggering UL protocol data unit (PDU) set handling based on the UL protocol description.

6. The method of claim 5, wherein the UL protocol description is transmitted along with a quality of service (QoS) rule, and
the QoS rule is associated with a PDU set QoS parameter.

7. The method of claim 5, wherein the UL protocol description and the PDU set QoS parameter are received from the AF entity via the PCF entity.

8. A session management function (SMF) entity in a wireless communication system, the SMF entity comprising:
a transceiver; and
a controller configured to control reception of an uplink (UL) protocol description from a policy control function (PCF) entity via the transceiver, - the UL protocol description being transmitted from an application function (AF) entity to the PCF entity, and
transmission of the UL protocol description for UL protocol data unit (PDU) set handling of a terminal.

9. The SMF entity of claim 8, wherein the UL protocol description is transmitted along with a quality of service (QoS) rule, and
the QoS rule is associated with a PDU set QoS parameter.

10. The SMF entity of claim 9, wherein the UL protocol description and the PDU set QoS parameter are received from the AF entity via the PCF entity.

11. The SMF entity of claim 8, wherein the UL protocol description is used for PDU set handling in UL transmission of the terminal.

12. A terminal in a wireless communication system, comprising:
a transceiver; and
a controller configured to control transmission of a PDU session establishment request message via the transceiver,
reception of a PDU session establishment accept message including an uplink (UL) protocol description from a session management function (SMF) entity in response to the PDU session establishment request message, and
triggering of UL protocol data unit (PDU) set handling based on the UL protocol description.

13. The terminal of claim 12, wherein the UL protocol description is transmitted along with a quality of service (QoS) rule, and
the QoS rule is associated with a PDU set QoS parameter.

14. The terminal of claim 12, wherein the UL protocol description and the PDU set QoS parameter are received from the AF entity via the PCF entity.
